# EUROPEAN PATENT APPLICATION

(11) **EP 1 553 148 A1**
(43) Date of publication of application: **13.07.2005**
(21) Application number: 04000371.7
(22) Date of filing: 09.01.2004
(51) Int. Cl.: C09D 167/02, C08L 67/02, C08G 63/00, C09D 5/03

(54) **Powder coating compositions**

(71) Applicant: SURFACE SPECIALTIES, S.A., 1070 Bruxelles (BE)
(72) Inventor: Moens, Luc, 1640 Sint-Genesius-Rode (BE); Buysens, Kris, 9700 Oudenaarde (BE); Maetens, Daniel, 1082 Brüssel (BE)
(74) Representative: Destryker, Elise Martine

(57) **Abstract**

The present invention relates to a thermosetting powder coating composition for preparing high gloss coatings with improved outdoor durability and flexibility, comprising as binder a bend of two carboxyl group containing resins of which one is an isophthalic acid rich polyester, containing neopentylglycol and linear chain aliphatic (poly)ether diols and/or linear chain diols, while the other one is a terephthalic acid rich polyester containing neopentylglycol, both in a mixture with at least one cross-linker having functional groups reactable with the polyesters carboxyl groups.
The invention also relates to the use of said compositions for the preparation of powdered paints and varnishes for the making of coatings and to coatings obtained therewith.

## Description

The present invention relates to thermosetting powder coating compositions.

The invention also relates to the use of said compositions for the preparation of powdered paints and varnishes for the making of coatings and to coatings obtained therewith.

Thermosetting powder compositions are well known in the art and are widely used as paints and varnishes for coating the most various articles. The advantages of these powder coatings are numerous; on the one hand, the problems associated with solvents are completely eliminated, and on the other hand, the powders are used without any loss since only the powder in direct contact with the substrate is retained on the article, the excess powder being, in principle, entirely recoverable and reusable. For these and other reasons, the powder coating compositions are preferred to coating compositions in the form of solutions in organic solvents.

Thermosetting powder compositions have already been widely used in the coating of domestic electrical appliances, automobile industry accessories, and the like. They generally contain a thermosetting organic binder, fillers, pigments, catalysts and various additives used to adapt their properties to their intended use.

There are various types of thermosetting powder compositions. The best known compositions contain either a mixture of carboxyl group-containing polymers, such as a carboxyl group-containing polyester or polyacrylate, and epoxy compounds, such as triglycidyl isocyanurate, glycidyl group-containing acrylic copolymers or β-hydroxyalkylamides or a mixture of hydroxyl group-containing polymers, most often a hydroxyl group-containing polyester, with blocked or non-blocked isocyanates, melamine resins, and the like.

The carboxyl group-containing or the hydroxyl group-containing polyesters suitable for use in the preparation of powdered varnishes and paints have already been described in numerous publications such as articles and patents.

These polyesters are usually prepared from aromatic dicarboxylic acids, mainly terephthalic acid and isophthalic acid and optionally a minor proportion of aliphatic or cycloaliphatic dicarboxylic acids, and from various polyols such as ethylene glycol, neopentyl glycol, 1,6-hexanediol, trimethylolpropane, and the like.

These polyesters based on aromatic dicarboxylic acids, when they are used with an appropriate cross-linking agent, provide thermosetting compositions giving paint and varnish coatings possessing good properties, both as regards their appearance and as regards their mechanical properties such as impact resistance, flexibility, etc.

Some of these polyesters and the powders derived from them often are used because of their remarkable weatherability characteristics. These polyesters mostly are derived from isophthalic acid, being the most important acid constituent among others. Yet, the coatings obtained from these powders, though proving outstanding weatherability, do not have any flexibility at all.

Some solutions have been sought for resolving the problems of lack of flexibility of coatings made from powders containing isophthalic-rich polyesters.

EP 649890 discloses powder coating compositions comprising a β-hydroxyalkylamide cross-linking agent and an acid functional polyester having an acid number ranging from 15 through 70 mg KOH/g which is substantially based on dicarboxylic acid units containing 80 to 100% mole of isophthalic acid, on glycols containing at least 50% mole of branched aliphatic glycols with at least 4 carbon atoms, at most 50% mole of a linear aliphatic diol with less than 4 carbon atoms and/or cycloaliphatic diols, 0 to 10% mole of a linear aliphatic diol with at least 4 carbon atoms and on monomers having a functionality of at least three, in an amount of 2 to 8% mole based on the total amount of dicarboxylic acids and glycols.

As appears from the examples, all polyester resins, as illustrated, have acid numbers of from 48 to 52 mg KOH/g and contain a monomer having a functionality of three. Only a very few powders of this invention give good flow on melting, which results in coatings having a bad surface appearance. No powders, having as binder constituent a polyester resin with an acid number lower than 48 mg KOH/g, are illustrated.

EP 389926 describes flexible outdoor durable powder paints derived from isophthalic acid rich polyesters.

As appears from all the examples, a monomer with a functionality of three is always present in the polyesters. Also, when acid numbers of less than 50 mg KOH/g are concerned in the examples, a preponderant amount of terephthalic acid is incorporated in the polyester structures in order to get flexibility of the coating. The damaging influence of terephthalic acid incorporation on outdoor durability of an isophthalic acid rich polyester is clearly emphasised.

A yet sophisticated way to flexibilise thermosetting powder coating compositions derived from carboxyl functional isophthalic acid rich amorphous polyesters is the use of semi-crystalline acid functional polyesters as co-reactable part of the carboxylic acid amorphous resin in a binder along with a polyepoxy compound or a β-hydroxyalkylamides, such as disclosed in e.g. WO 91/14745. A careful selection of the proper combination of amorphous and semi-crystalline resins, respectively, enables for flexible and weatherable powder coating compositions derived from carboxyl functional isophthalic acid rich polyesters, as far as particular process conditions for mixing, extrusion and grinding are exercised and appropriate storage conditions of the powder thus obtained, are considered. Anyway, the solution presented in this invention to mix a semi-crystalline acid functional polyesters with a carboxyl functional amorphous polyester represents a technical complication.

In conclusion it can be seen that the various powdered compositions which have been proposed today for outdoor application where an outstanding weatherability along with flexibility is required, all are characterised by one or more drawbacks or limitations not only from a technical point of view but also when economical considerations are put forward. There is thus still a need for powdered thermosetting compositions capable of producing coatings proving at the same time an improved weatherability and a good flexibility and not exhibiting the shortcomings of prior art.

According to the present invention, we now have surprisingly found that by using as a binder a mixture of two specific carboxyl group containing polyesters A) and B), characterised in that polyester A) is an isophthalic acid rich polyester, containing linear chain aliphatic (poly)ether diols and/or linear chain diols, and that polyester B) is a terephthalic acid rich polyester, along with a curing agent having functional groups reactable with the polyesters' A) and B) carboxylic end groups, it is possible to obtain powdered thermosetting compositions which produce coatings having improved weatherability combined with good flow and flexibility.

As will appear from the comparative examples, as reproduced below, the combination of paint performances as obtained from the particular binder composition according to the present invention, is not obtained from powder coating compositions derived from a binder in which the mixture of both separated resins A) and B) is replaced by a single resin having a monomer composition identical to the one of both resins A) and B) together. Also, it will appear that if the linear chain aliphatic (poly)ether diols and/or linear chain diols is omitted from polyester A), the good combination of said paint performances obtained according to the invention cannot be obtained.

In the past it already has been demonstrated that only the addition of quite low amounts of terephthalic acid to an isophthalic acid rich polyester, as in EP 389926, reduces outdoor durability of the derived coating to a level which is similar to the outdoor durability of a coating obtained from a standard terephthalic acid based resin.

Thus, according to the present invention, there are provided new powdered thermosetting compositions for coatings, wherein the binder comprises a blend of two carboxyl group containing polyesters and one or more cross-linkers having functional groups reactable with both the polyesters' carboxylic groups, characterised in that said polyester blend comprises:
- from 20 to 80 % weight of an isophthalic acid rich polyester A) which is composed of a polyacid constituent comprising from 85 to 100 % mole of isophthalic acid and from 0 to 15 % mole of another aromatic and/or (cyclo)aliphatic polyacid and of a polyol constituent comprising from 40 to 95 % mole of neopentylglycol, from 5 to 60 % mole of a linear chain aliphatic (poly)ether diol and/ or a linear chain aliphatic diol and from 0 to 30 % mole of another (cyclo)aliphatic polyol and
- from 80 to 20 % weight a terephthalic acid rich polyester B) which is composed of a polyacid constituent comprising from 70 to 100 % mole of terephthalic acid and from 0 to 30 % mole of another aromatic and/or (cyclo)aliphatic polyacid and of a polyol constituent comprising from 50 to 100 % mole of neopentylglycol and from 0 to 50 % mole of another (cyclo)aliphatic polyol.

The acid constituent of the isophthalic acid rich polyester A) according to the present invention is for 85 to 100% mole composed of isophthalic acid and for 0 to 15% mole of another polyacid constituent selected from one or more aliphatic, cycloaliphatic or aromatic polyacids, such as fumaric acid, maleic acid, phthalic acid, terephthalic acid, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azealic acid, sebacic acid, 1,12-dodecanedioic acid, trimellitic acid or pyromellitic acid, etc., or the corresponding anhydrides.

The glycol constituent of the isophthalic acid rich polyester A) according to the present invention, is for 5 to 60% mole composed of a linear chain aliphatic (poly)ether diol such as diethylene glycol, dipropylene glycol, triethylene glycol and tripropylene glycol, used in a mixture or alone and/or linear chain aliphatic diol, preferably a C₂- C₁₆-diol such as ethyleneglycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,14-tetradecandiol, 1,16-hexadecandiol, used in a mixture or alone. The glycol constituent of this polyester also comprises 40 to 95% mole of neopentyl glycol and for 0 to 30% mole and preferably for 0 to 20% mole of another polyol constituent selected from one or more aliphatic or cycloaliphatic polyol such as propylene glycol, 1,4-cyclohexanediol, 1,4-cyclohexanedimethanol, hydrogenated Bisphenol A, 2-methyl-1,3-propanediol, 2-butyl-2-ethyl-1,3-propanediol, neopentyl glycol hydroxypivalate, trimethylolpropane, ditrimethylolpropane, pentaerythrytol, etc.

Preferably, the polyester A) according to the present invention is composed of polycarboxylic acid units containing from 85 to 100% mole of isophthalic acid, from 0 to 15% mole of adipic acid and/or 1,4-cyclohexanedicarboxylic acid, and of polyol constituents containing from 5 to 60% mole of linear chain aliphatic (poly)ether diol preferably diethylene glycol, and /or linear chain aliphatic diol, preferably ethylene glycol or/and 1,6-hexanediol, from 40 to 95% mole of neopentyl glycol and from 0 to 30% mole of trimethylolpropane or pentaerythrytol. More preferably, this polyester A) does not contain trimethylolpropane nor pentaerythrytol. This preferred polyester A) is used in an amount of 35 to 65% weight relative to the total amount of polyesters A) and B).

The acid constituent of the terephthalic acid rich polyester B) according to the present invention is for 70 to 100% mole composed of terephthalic acid and for 0 to 30% mole of another polyacid constituent selected from one or more aliphatic, cycloaliphatic or aromatic polyacids, such as fumaric acid, maleic acid, phthalic acid, isophthalic acid, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azealic acid, sebacic acid, 1,12-dodecanedioic acid, trimellitic acid or pyromellitic acid, etc., or the corresponding anhydrides.
The glycol constituent of the terephthalic acid rich polyester B) according to the present invention, is for 50 to 100% mole composed of neopentyl glycol and for 0 to 50% mole of another polyol constituent selected from one or more aliphatic or cycloaliphatic polyol such as ethylene glycol, diethylene glycol, propylene glycol, 1,6-hexanediol, 1,4-cyclohexanediol, 1,4-cyclohexanedimethanol, hydrogenated Bisphenol A, 2-methyl-1,3-propanediol, 2-butyl-2-ethyl-1,3-propanediol, neopentyl glycol hydroxypivalate, trimethylolpropane, ditrimethylolpropane, pentaerythrytol, etc.

Preferably, the polyester B) according to the present invention is composed of polycarboxylic acid units containing from 70 to 100% mole of terephthalic acid, from 0 to 30% mole of isophthalic acid and/or adipic acid, and of polyol constituents containing from 50 to 100% mole of neopentyl glycol and from 0 to 50% mole of 2-butyl-2-ethyl-1, 3-propanediol, neopentyl glycol hydroxypivalate, trimethylolpropane or pentaerythrytol. More preferably, this polyester B) does not contain trimethylolpropane nor pentaerythrytol. This preferred polyester B) is used in amount of 65 to 35% weight relative to the total amount of polyesters A) and B).

The carboxylic acid group containing amorphous polyesters, according to the present invention, are usually prepared using conventional esterification techniques well known in the art. The polyesters may be prepared according to a procedure consisting of one or more reaction steps.
For the preparation of these polyesters, a conventional reactor equipped with a stirrer, an inert gas (nitrogen) inlet, a thermocouple, a distillation column connected to a water-cooled condenser, a water separator and a vacuum connection tube is generally used.
The esterification conditions used to prepare the polyesters are generally conventional, namely a standard esterification catalyst, such as dibutyltin oxide, dibutyltin dilaurate, n-butyltin trioctoate, sulphuric acid or a sulphonic acid, tetraisopropyl titanate or tetra-n-butyl titanate can be used in an amount from 0.05 to 1.50% by weight of the reactants and optionally, colour stabilisers, for example, phenolic antioxidants such as Irganox 1010 (Ciba) or phosphonite- and phosphite-type stabilisers such as tributylphosphite, can be added in an amount from 0 to 1% by weight of the reactants.
Polyesterification is generally carried out at a temperature which is gradually increased from 130°C to about 190 to 250°C, first under normal pressure, then, when necessary, under reduced pressure at the end of each process step, while maintaining these operating conditions until a polyester is obtained, which has the desired hydroxyl and/or acid number. The degree of esterification is followed by determining the amount of water formed in the course of the reaction and the properties of the obtained polyester, for example the hydroxyl number, the acid number, the molecular weight or the viscosity.

The carboxyl functional polyesters A) and B) of the present invention both are preferably characterised by:
- an acid number from 15 to 70 mg KOH/g, preferably from 20 to 45 mg KOH/g and more preferably from 25 to 35 mg KOH/g
- a number average molecular weight ranging from 1600 to 8600, preferably from 2200 to 7000 and more preferably from 3200 to 6500 as measured by gel permeation chromatography (GPC)
- a glass transition temperature Tg from 40 to 80°C and preferably from 50 to 70°C as measured by differential scanning calorimetry (DSC) according to ASTM D3418 with a heating gradient of 20°C per minute
- a Brookfield (cone/plate) viscosity according to ASTM D4287, measured at 200°C, ranging from 5 to 20000 mPa.s

The carboxyl group containing polyester A) and B), as described above, are part of a binder system along with one or more crosslinkers, preferably chosen from epoxy group and/or β-hydroxyalkylamide group containing cross-linkers, in the preparation of powder coating compositions for use as paint or clear lacquer.

The ratio of the isophthalic acid rich polyester A) to the terephthalic acid rich polyester B) varies from 80/20 to 20/80 dependent on whether more outdoor resistance or more flexibility is aimed for. The polyesters can be blended in the melt by adding polyester A) to B) or B) to A) and mixing them in the stirred reactor used for their preparation, or by using a static mixer or by extrusion or by any other means being used for blending resins.

The resins A) and B) also can be added as separate resins to the premix along with the cross-linker(s) and, optionally, the other constituents needed for the preparation of a powder coating formulation.

The polyepoxy compound, usuable as cross-linker in the binder composition of the present invention, generally is solid at room temperature, and contains at least two epoxy groups per molecule such as for example, triglycidyl isocyanurate (TGIC) like the one marketed under the tradename of Araldite PT810 or the mixture of diglycidyl terephthalate and triglycidyl trimellitate, like the one marketed under the tradename of Araldite PT910 or PT912 or acrylic copolymers containing glycidyl groups obtained from glycidyl methacrylate and/or glycidyl acrylate and a (meth)acrylic monomer and, optionally, an ethylenically mono-unsaturated monomer different from glycidyl (meth) acrylate or from the (meth)acrylic monomer. An example of this type of acrylic copolymer is GMA252 marketed by Estron Chemical Inc, and is mentioned in International patent application PCT WO 91/01748.

The β-hydroxyalkylamide containing compound, usuable as cross-linker in the binder composition of the present invention, generally answers the general structure as represented in Formula I. 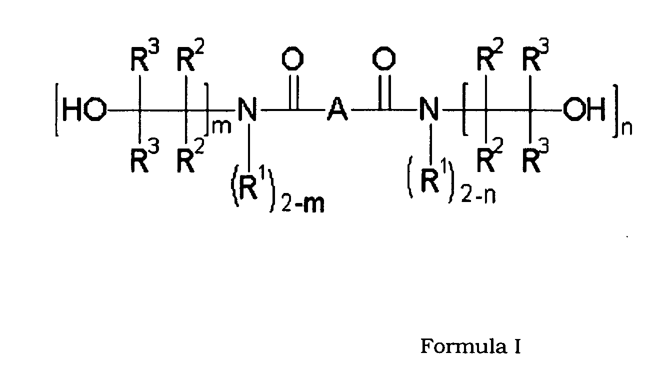 Wherein:
A represents a mono- or polyvalent organic group derived from a saturated or unsaturated alkyl group with 1 to 60 carbon atoms (for example ethyl, methyl, propyl, butyl, pentyl, hexyl, heptyl, octyl, nonyl, decyl, eicosyl, triacontyl, tetracontyl, pentacontyl and hexacontyl); an aryl group (such as phenyl, naphtyl); a trialkene amino group with 1 to 4 carbon atoms per alkylene group (for example trimethylene amino and triethylene amino); or an unsaturated radical containing one or more alkenic groups (-C=C-) with 1 to 4 carbon atoms (such as ethenyl, 1-methyl ethenyl, 3-butenyl-1,3-diyl and 2-propenyl-1,2-diyl), carboxy-alkenyl group with 1 to 4 carbon atoms (for example 3-carboxy-2-propenyl), alkoxy carbonyl alkenyl with 1 to 4 carbon atoms (such as 3-methoxy carbonyl-2-propenyl)
R1 represents hydrogen, an alkyl group with 1 to 5 carbon atoms or a hydroxyalkyl group with 1 to 5 carbon atoms
R2 and R3 are the same or different and each independently represents hydrogen or a straight or branched alkyl group with 1 to 5 carbon atoms, while one of the groups R2 and one of the groups R3 may also form, together with the adjacent carbon atoms, a cycloalkyl group.
n and m, independently, have values from 1 to 2, preferably from 1.6 to 2.
A is preferably an C1 - C 10 alkyl.
According to the present invention, a mixture of cross-linkers can be used.
In a preferred embodiment of the present invention, the curing agent, having functional groups reactable with the polyesters' carboxylic acid groups, is a β-hydroxyalkylamide according to Formula II 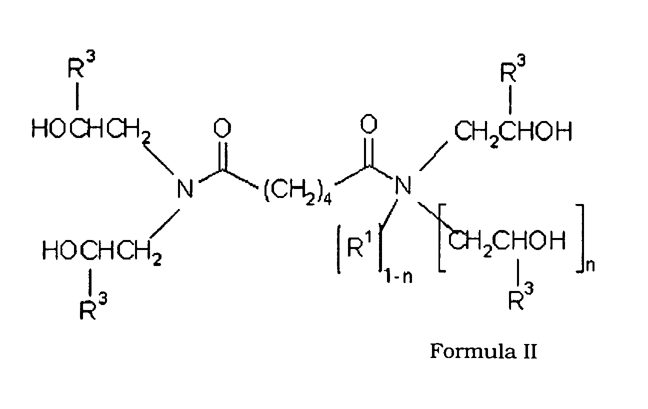 wherein n is from 0.2 to 1, R1 is selected from hydrogen and alkyl groups with 1 to 5 carbon atoms and R3 is hydrogen (Primid XL552 from EMS) or a methyl group (Primid QM1260 from EMS). The binders of the present invention preferably contain 70 to 98% weight of the blend of the polyesters A) and B) and 30 to 2% weight of cross-linkers. Preferably, this ratio is of 85 to 98% weight for the polyesters and 15 to 2% weight of the cross-linkers, especially one or more β-hydroxyalkylamide group containing cross-linkers.

In addition to the essential components described above, compositions within the scope of the present invention which comprise 100 to 50% weight of the binder can also include from 0% to 50% weight of various additives. These additives comprise cross linking catalysts such as amines (e.g. 2-phenylimidazoline), phosphines (e.g. triphenylphosphine), ammonium salts (e.g. tetrabutylammonium bromide or tetrapropylammonium chloride), phosphonium salts (e.g. ethyltriphenylphosphonium bromide or tetrapropylphosphonium chloride etc., flow control agents such as Resiflow PV5 (Worlee), Modaflow (Monsanto), Acronal 4F (BASF), etc., and degassing agents such as benzoin (BASF) etc. To the formulation UV-light absorbers such as Tinuvin 900 (Ciba), hindered amine light stabilisers represented by Tinuvin 144 (Ciba), other stabilising agents such as Tinuvin 312 and 1130 (Ciba), antioxidants such as Irganox 1010 (Ciba) and stabilisers from the phosphonite or phosphite type can be added.

Both, pigmented systems as well as clear lacquers can be prepared.
A variety of dyes and pigments can be utilised in the composition of this invention. Examples of useful pigments and dyes are: metallic oxides such as titaniumdioxide, ironoxide, zincoxide and the like, metal hydroxides, metal powders, sulphides, sulphates, carbonates, silicates such as ammoniumsilicate, carbon black, talc, china clay, barytes, iron blues, leadblues, organic reds, organic maroons and the like.

The compositions according to the invention permit to prepare high gloss coatings with both improved outdoor durability and improved flexibility.

The components of the composition according to the invention may be mixed by dry blending in a mixer or blender (e.g. drum mixer). The premix is then homogenised at temperatures ranging from 70 to 150°C in a single screw extruder such as the BUSS-Ko-Kneter or a double screw extruder such as the PRISM or APV. The extrudate, when cooled down, is grounded to a powder with a particle size ranging from 10 to 150 µm. The powdered composition may be deposited on the substrate by use of a powder gun such as an electrostatic CORONA gun or TRIBO gun. On the other hand, well-known methods of powder deposition such as the fluidised bed technique can be used. After deposition the powder is heated to a temperature between 140 and 250°C, causing the particles to flow and fuse together to form a smooth, uniform, continuous, uncratered coating on the substrate surface.

The following examples are submitted for a better understanding of the invention without being restricted thereto.

### Example 1

A mixture of 360.597 parts of neopentyl glycol and 63.635 parts of 1,6-hexanediol are placed in a conventional four neck round bottom flask equipped with a stirrer, a distillation column connected to a water cooled condenser, an inlet for nitrogen and a thermometer attached to a thermoregulator.
The flask contents are heated, while stirring under nitrogen, to a temperature of circa 130°C at which point 708.559 parts of isophthalic acid and 2.472 parts of n-butyltin trioctoate are added. The heating is continued gradually to a temperature of 230°C. Water is distilled from the reactor from 180°C on. When distillation under atmospheric pressure stops, 0.994 parts of tributylphosphite are added and a vacuum of 50 mm Hg is gradually applied. After three hours at 230°C and 50 mm Hg, following characteristics are obtained:

| | |
|---|---|
| AN | 29.8 mg KOH/g |
| OHN | 1.4 mg KOH/g |
| Brookfield^{200°C} (cone/plate) | 1700 mPa.s |
| Tg (DSC, 20°/min) | 54°C |

### Example 2

A mixture of 337.948 parts of neopentyl glycol and 91.892 parts of diethylene glycol are placed in a reactor as for Example 1. At a temperature of 130°C, 712.333 parts of isophthalic acid and 2.473 parts of n-butyltin trioctoate are added. The reaction is continued at 230°C as in Example 1. When transparent, 0.990 tributylphosphite parts are added and vacuum is applied until following characteristics are obtained:

| | |
|---|---|
| AN | 29.4 mg KOH/g |
| OHN | 1.8 mg KOH/g |
| Brookfield^{175°C} (cone/plate) | 4820 mPa.s |
| Tg (DSC, 20°/min) | 52°C |

The thus obtained polyester resin is cooled down to 180°C and 2.475 parts of ethyltriphenylphosponium bromide are added. Half an hour after the addition the reactor is emptied.

### Example 3

A mixture of 418.714 parts of neopentyl glycol are placed in a reactor as for Example 1. At a temperature of 130°C 530.841 parts of terephthalic acid, 33.532 parts of adipic acid, 33.355 parts of isophthalic acid and 1.500 parts of n-butyltin trioctoate are added and the mixture is heated to 230°C. The reaction is continued at 230°C under atmospheric pressure until about 95% of the theoretical amount of water is distilled and a transparent hydroxyl functionalised prepolymer with following characteristics is obtained:

| | |
|---|---|
| AN | 9 mg KOH/g |
| OHN | 87 mg KOH/g |

To the first step prepolymer standing at 200°C, 113.718 parts of isophthalic acid are added. Thereupon, the mixture is heated to 230°C. After a 2 hour period at 230°C and when the reaction mixture is transparent, 0.884 parts of tributylphosphite are added and a vacuum of 50 mm Hg is gradually applied. After 3 hours at 230°C and 50 mm Hg, following characteristics are obtained:

| | |
|---|---|
| AN | 33 mg KOH/g |
| OHN | 4 mg KOH/g |
| Brookfield^{200°C} (cone/plate) | 3160 mPa.s |
| Tg (DSC, 20°/min) | 61°C |

### Example 4

A mixture of 426.546 parts of neopentyl glycol are placed in a reactor as for Example 1. At a temperature of 130°C 611.986 parts of terephthalic acid and 2.264 parts of n-butyltin trioctoate are added. The reaction is continued as in Example 3 until following characteristics is obtained:

| | |
|---|---|
| AN | 7 mg KOH/g |
| OHN | 55 mg KOH/g |

To the first step prepolymer standing at 200°C, 56.339 parts of isophthalic acid and 49.562 parts of adipic acid are added. Thereupon, the reaction is continued as for Example 3. When the resin is transparent, 0.906 parts of tributylphosphite are added and vacuum applied until following characteristics are obtained:

| | |
|---|---|
| AN | 31.9 mg KOH/g |
| OHN | 2.3 mg KOH/g |
| Brookfield^{200°}C (cone/plate) | 3550 mPa.s |
| Tg (DSC, 20°/min) | 57°C |

The thus obtained polyester resin is cooled down to 180°C and 2.475 parts of ethyltriphenylphosponium bromide are added. Half an hour after the addition the reactor is emptied.

### Comparative example 5

A mixture of 364.560 parts of neopentyl glycol and 64.334 parts of 1,6-hexanediol are placed in a reactor as for Example 1. At a temperature of 130°C 356.413 parts of terephthalic acid, 248.703 parts of isophthalic acid and 2.583 parts of n-butyltin trioctoate are added. The reaction is continued as in example 3, until following characteristics is obtained:

| | |
|---|---|
| AN | 10 mg KOH/g |
| OHN | 61 mg KOH/g |

To the first step prepolymer standing at 200°C, 108.141 parts of isophthalic acid are added. Thereupon, the reaction is continued as in Example 3. When the resin is transparent, 1.038 parts of tributylphosphite are added and vacuum applied until following characteristics are obtained:

| | |
|---|---|
| AN | 30.9 mg KOH/g |
| OHN | 2.3 mg KOH/g |
| Brookfield^{175°C} (cone/plate) | 9500 mPa.s |
| . Tg (DSC, 20°/min) | 57°C |

### Comparative example 6

A mixture of 381.236 parts of neopentyl glycol and 42.359 parts of diethylene glycol are placed in a reactor as for Example 1. At a temperature of 130°C 304.678 parts of terephthalic acid, 273.847 parts of isophthalic acid, 25.994 parts of adipic acid and 2.241 parts of n-butyltin trioctoate are added. The reaction is continued as in Example 3 until following characteristics are obtained:

| | |
|---|---|
| AN | 12 mg KOH/g |
| OHN | 61 mg KOH/g |

To the first step prepolymer standing at 230°C, 115.057 parts of isophthalic acid are added. Thereupon, the reaction is continued as in Example 3 . When the resin is transparent, 0.896 parts of tributylphosphite are added and a vacuum is applied until following characteristics are obtained:

| | |
|---|---|
| AN | 33.4 mg KOH/g |
| OHN | 1.4 mg KOH/g |
| Brookfield^{200°C} (cone/plate) | 1800 mPa.s |
| Tg (DSC, 20°/min) | 55°C |

The thus obtained polyester resin is cooled down to 180°C. and 2.500 parts of ethyltriphenylphosponium bromide are added. Half an hour after the addition the reactor is emptied.

### Example 7 to 15

The polyesters as illustrated above, are then formulated to a powder according to the formulation as mentioned below.

| Formulation C Brown paint formulation | |
|---|---|
| Binder | 78.33 |
| Bayferrox 130 | 4.44 |
| Bayferrox 3950 | 13.80 |
| Carbon Black FW2 | 1.09 |
| Resiflow PV5 | 0.99 |
| Benzoin | 0.35 |

The powders are prepared first by dry blending of the different components and then by homogenisation in the melt using a PRISM 16 mm L/D 15/1 twin screw extruder at an extrusion temperature of 85°C. The homogenised mix is then cooled and grinded in an Alpine. Subsequently the powder is sieved to obtain a particle size between 10 and 110 µm. The powder thus obtained is deposited on cold rolled steel with a thickness of 0.8 mm, by electrostatic deposition using the GEMA - Volstatic PCG 1 spraygun. At a film thickness of about 80 µm the panels are transferred to an air-ventilated oven, where curing proceeds for 15 minutes at a temperature of 200°C. The paint characteristics for the finished coatings obtained from the polyesters in the mixture of the present invention (Ex. 1 to 4) as well as from the two polyesters of example 5 and 6, illustrated by way of comparison, are given in table 1.

In this table:
- Column 1 :: indicates the identification number of the formulation
- Column 2 :: indicates the type and quantity of the isophthalic acid (iPA) rich polyester resin A) used in the formulation
- Column 3:: indicates the type and quantity of the terephthalic acid (TPA) rich polyester resin B) used in the formulation.
- Column 4 :: indicates the type and quantity of cross-linker
- Column 5 :: indicates the 60° gloss, measured according to ASTM D523
- Column 6 :: indicates the direct impact strength according to ASTM D2794. The highest impact which does not crack the coating is recorded in kg.cm.
- Column 7 :: indicates the reverse impact strength according to ASTM D2794. The highest impact which does not crack the coating is recorded in kg.cm.
- Column 8 :: indicates the number of hours needed for a gloss 60° reduction till 50% of the initial maximum value under influence of QUV-B exposure. Weathering measurements are conducted in a very severe environment, i.e. the Q-UV accelerated weathering tester (Q-Panel Co) according to ASTM G53-88 (standard practice for operating light and water exposure apparatus - fluorescent UV/condensation type - for exposure of non metallic materials). The coated panels have been subjected to the intermittent effects of condensation (4 hours at 40°C) as well as the damaging effects of sunlight simulated by fluorescent UV-B lamps (313 nm, I = 0.67 W/m²/nm) (4 hours at 50°C).

**Table I**

| Example | iPA resin A | TPA resin B | cross linker | Gloss 60° | DI | RI | UV-B |
|---|---|---|---|---|---|---|---|
| 8 | Ex. 1 - 74.42 | Ex.3 - 0 | XL552-3.91 | 95 | 60 | 40 | 600 |
| 9 | Ex.1 - 0 | Ex.3 - 74.42 | XL552-3.91 | 92 | 120 | 120 | 300 |
| 10 | Ex.1-29.77 | Ex.3 - 44.65 | XL552-3.91 | 92 | 100 | 80 | 500 |
| 11 | Ex.5 - 74.42 | | XL552-3.91 | 90 | 40 | 40 | 280 |
| 12 | Ex.2 - 72.84 | Ex.4 - 0 | TGIC-5.49 | 92 | 40 | 40 | 670 |
| 13 | Ex.2 - 0 | Ex.4 - 72.84 | TGIC-5.49 | 91 | 140 | 120 | 280 |
| 14 | Ex.2 - 36.42 | Ex.4 - 36.42 | TGIC-5.49 | 90 | 80 | 80 | 450 |
| 15 | Ex.6 - 72.84 | | TGIC-5.49 | 90 | 40 | 20 | 250 |

From the above examples it clearly appears that powder coatings derived from isophthalic acid based polyesters (Ex. 8 & Ex.12) have very good UV-B resistance, yet prove a lack of flexibility. On the contrary, powder coatings derived from terephthalic acid rich polyesters have good flexibility, yet prove a lack of UV-B resistance (Ex 9. & Ex. 13). The powders of Ex. 10 and Ex. 14, according to the present invention and based on a mixture of an isophthalic acid rich polyester and a terephthalic acid rich polyester, prove paint properties tending towards the best of each constituent, i.e. good flexibility of the terephthalic acid rich constituent and good UV-B resistance of isophthalic acid rich constituent.
Yet, when the separate polyesters of the mixture of Ex 10 and Ex. 14 are cooked in one resin (Ex. 11 based on polyester resin of Ex.5 corresponding to a 40/60 mixture of the polyesters of Ex. 1 and Ex. 3 as in Ex. 10) and (Ex.15 based on polyester resin of Ex.6 corresponding to a 50/50 mixture of the polyesters of Ex. 2 and Ex. 4 as in Ex. 14) paint performances more or less tending towards the worst of each constituent, i.e. mediocre to bad flexibility of the isophthalic acid rich constituent and mediocre to bad UV-B resistance of terephthalic acid rich constituent, are perceived.

### Comparative Example 16

418.443 parts of neopentyl glycol are placed in a conventional four neck round bottom flask equipped with a stirrer, a distillation column connected to a water cooled condenser, an inlet for nitrogen and a thermometer attached to a thermoregulator.
The flask contents are heated, while stirring under nitrogen, to a temperature of circa 130°C at which point 718.897 parts of isophthalic acid and 2.481 parts of n-butyltin trioctoate are added. The heating is continued gradually to a temperature of 230°C. Water is distilled from the reactor from 180°C on. When distillation under atmospheric pressure stops, 0.993 parts of tributylphosphite are added and a vacuum of 50 mm Hg is gradually applied. After three hours at 230°C and 50 mm Hg, following characteristics are obtained:

| | |
|---|---|
| AN | 34.0 mg KOH/g |
| OHN | 1.8 mg KOH/g |
| Brookfield^{200°C} (cone/plate) | 2150 mPa.s |
| Tg (DSC, 20°/min) | 62°C |

### Example 17

A mixture of 377.630 parts of neopentyl glycol and 32.893 parts of ethylene glycol are placed in a reactor as for Example 16. At a temperature of 130°C 550.335 parts of terephthalic acid, 67.370 parts of isophthalic acid and 1.499 parts of n-butyltin trioctoate are added and the mixture is heated to 230°C. The reaction is continued at 230°C under atmospheric pressure until about 95% of the theoretical amount of water is distilled and a transparent hydroxyl functionalised prepolymer with following characteristics is obtained:

| | |
|---|---|
| AN | 5.0 mg KOH/g |
| OHN | 59.0 mg KOH/g |

To the first step prepolymer standing at 200°C, 79.252 parts of isophthalic acid and 32.294 parts of adipic acid are added. Thereupon, the mixture is heated to 230°C. After a 2 hour period at 230°C and when the reaction mixture is transparent, 0.508 parts of tributylphosphite are added and a vacuum of 50 mm Hg is gradually applied. After 3 hours at 230°C and 50 mm Hg, following characteristics are obtained:

| | |
|---|---|
| AN | 33 mg KOH/g |
| OHN | 4 mg KOH/g |
| Brookfield^{200°C} (cone/plate) | 3160 mPa.s |
| Tg (DSC, 20°/min) | 62°C |

### Example 18 to 20

The resins of example 16 and 17 are formulated into a brown paint formulation according to example 7. After application and curing for 15 minutes at 200°C, paint performances, as reproduced in the table below, are obtained..
In the same way a mixture composed of 40 parts of the polyester of example 16 and 60 parts of the polyester of example 17 are formulated into the brown paint formulation of example 20. Paint performances are given in table 2.

**Table 2**

| Example | iPA resin | TPA resin | cross linker | Gloss 60° | DI | RI | UV-B |
|---|---|---|---|---|---|---|---|
| 18 | Ex.16-74.42 | Ex.17-0 | XL552-3.91 | 93 | 0 | 0 | 620 |
| 19 | Ex.16 - 0 | Ex.17 - 74.42 | XL552-3.91 | 91 | 120 | 120 | 300 |
| 20 | Ex.16 - 29.77 | Ex.17 - 44.65 | XL552-3.91 | 92 | 20 | 0 | 380 |

From the above examples it clearly appears that powder coatings derived from isophthalic acid based polyesters, but not containing linear chain aliphatic (poly)ether diol nor linear chain aliphatic diol (Ex. 18), have very good UV-B resistance, yet prove a complete lack of flexibility. On the contrary, powder coatings derived from terephthalic acid rich polyesters have good flexibility, yet prove a lack of UV-B resistance (Ex 19.). The powder of Ex. 20 based on a mixture of an isophthalic acid rich polyester, not answering the composition of the present invention, and a terephthalic acid rich polyester, prove paint properties for which QUV-B resistance is intermediary to these of the powders of example 18 and 19, yet having a bad flexibility similar to the one obtained with the isophthalic acid rich resin of example 18.

## Claims

1. Powdered thermosetting compositions for coatings, wherein the binder comprises a blend of two carboxyl group containing polyesters and one or more cross-linkers having functional groups reactable with both the polyesters' carboxylic groups, **characterised in that** said polyester blend comprises:
- from 20 to 80 % weight of an isophthalic acid rich polyester A) which is composed of a polyacid constituent comprising from 85 to 100 % mole of isophthalic acid and from 0 to 15 % mole of another aromatic and/or (cyclo)aliphatic polyacid and of a polyol constituent comprising from 40 to 95 % mole of neopentylglycol , from 5 to 60 % mole of a linear chain aliphatic (poly)ether diol and/or a linear chain aliphatic diol and from 0 to 30 % mole of another (cyclo)aliphatic polyol and
- from 80 to 20 % weight of a terephthalic acid rich polyester B) which is composed of a polyacid constituent comprising from 70 to 100 % mole of terephthalic acid and from 0 to 30 % mole of another aromatic and/or (cyclo)aliphatic polyacid and of a polyol constituent comprising from 50 to 100 % mole of neopentylglycol and from 0 to 50 % mole of another (cyclo)aliphatic polyol.

2. Powdered thermosetting compositions for coatings according to claim 1, **characterised in that** the carboxyl group containing polyesters A) and B) have:
- an acid number from 15 to 70 mg KOH/g, preferably from 20 to 45 mg KOH/g and more preferably from 25 to 35 mg KOH/g
- a number average molecular weight ranging from 1600 to 8600, preferably from 2200 to 7000 and more preferably from 3200 to 6500 as measured by gel permeation chromatography (GPC)
- a glass transition temperature Tg from 40 to 80°C and preferably from 50 to 70°C as measured by differential scanning calorimetry (DSC) according to ASTM D3418 with a heating gradient of 20°C per minute
- a Brookfield (cone/plate) viscosity accordingly to ASTM D4287, measured at 200°C, ranging from 5 to 20000 mPas.

3. Powdered thermosetting compositions for coatings according to any of claims 1 or 2, **characterised in that** the binder comprises from 70 to 98 % weight of a blend of the two carboxyl group containing polyesters A) and B) and from 30 to 2 % weight of one or more epoxy and/or β-hydroxyalkylamide group containing cross-linkers.

4. Powdered thermosetting compositions for coatings according to claim 3, **characterised in that** the binder comprises from 85 to 98% weight of a blend of the two carboxyl group containing polyesters A) and B) and from 15 to 2 % weight of one or more β-hydroxyalkylamide group containing cross-linkers.

5. Powdered thermosetting compositions for coatings according to any of claims 1 to 4, **characterised in that** the blend of the two carboxyl group containing polyesters A) and B), comprises from:
- 35 to 65 % weight of an isophthalic acid rich polyester A) that is composed of a polyacid constituent containing from 85 to 100% mole of isophthalic acid, from 0 to 15% mole of adipic acid and/or 1,4-cyclohexanedicarboxylic acid, and of a polyol constituent containing from 5 to 60% mole of diethylene glycol, and /or ethylene glycol and/or 1,6-hexanediol, from 40 to 95% mole of neopentyl glycol and from 0 to 30% mole of trimethylolpropane or pentaerythrytol.
- 65 to 35 % weight of a terephthalic acid rich polyester B) which is composed of polycarboxylic acid units containing from 70 to 100% mole of terephthalic acid, from 0 to 30% mole of isophthalic acid and/or adipic acid, and of polyol constituents containing from 50 to 100% mole of neopentyl glycol and from 0 to 50% mole of 2-butyl-2-ethyl-1,3-propanediol, neopentyl glycol hydroxypivalate, trimethylolpropane or pentaerythrytol.

6. Powdered thermosetting compositions according to any of claims 1 to 5, **characterised in that** they comprise from 50 to 100% weight of the binder and 0 to 50% weight of UV light absorbers and/or hindered amine light stabilisers, flow control agents, degassing agents, fillers, dyes or pigments.

7. Paints or vanishes compositions obtained from the powdered thermosetting compositions according to any of claims 1 to 6,

8. Process for coating an article, **characterised in that** the composition according to any of claims 1 to 7 is applied by an electrostatic or friction charging gun, or in a fluidised bed, and **in that** the coating thus obtained is heated at a temperature of from 140 to 250°C.

9. Entirely or partially substrate coated by the process of claim 8.
